# FASCICULE DE BREVET EUROPEEN

(11) **EP 3 126 150 B1**
(45) Date de publication et mention de la délivrance du brevet: **21.03.2018**
(21) Numéro de dépôt: 15773792.5
(22) Date de dépôt: 26.03.2015
(51) Int. Cl.: B41M 5/26, B23K 26/36, B41M 5/24

(54) **PROCEDE DE MARQUAGE EN SURFACE D'UNE PIECE MECANIQUE PAR UNE REPRESENTATION GRAPHIQUE PREDEFINIE AVEC EFFET DE TYPE HOLOGRAPHIQUE**
VERFAHREN ZUM BESCHRIFTEN DER OBERFLÄCHE EINES MECHANISCHEN TEILS MIT EINER VORGEGEBENEN GRAFISCHEN DARSTELLUNG MIT EINEM HOLOGRAFISCHEN EFFEKT
METHOD FOR MARKING THE SURFACE OF A MECHANICAL PART WITH A PRESET GRAPHICAL REPRESENTATION HAVING A HOLOGRAPHIC EFFECT

(30) Priorité: 01.04.2014 FR 1452850
(43) Date de publication de la demande: 08.02.2017
(73) Titulaire: Safran Aircraft Engines, 75015 Paris (FR)
(72) Inventeur: BILHE, Pascal, Fabrice, F-77550 Moissy-Cramayel Cedex (FR); BEGUE-DUTHU, Geoffrey, F-77550 Moissy-Cramayel Cedex (FR)
(74) Mandataire: Healy, Erwan
(86) Numéro de dépôt international: PCT/FR2015/050774
(87) Numéro de publication internationale: WO 2015/150668

(56) Documents cités:
- WO-A1-2006/129972
- WO-A1-2007/042429
- US-A- 4 194 814
- US-A1- 2013 270 269

## Description

### Arrière-plan de l'invention

La présente invention se rapporte au domaine général du marquage de pièces de moteur à turbine à gaz.

Un domaine d'application de l'invention est celui du marquage de pièces de turbomachines aéronautiques par une représentation graphique prédéfinie avec un effet de type holographique, notamment en vue d'assurer leur identification et leur authentification.

Dans le domaine aéronautique, il est connu d'apposer sur certaines pièces d'un moteur un numéro de série (sous la forme par exemple d'un code à base hexadécimale ou d'un code Datamatrix) permettant d'identifier ces pièces (on parle de marquage). A l'aide d'un tel numéro, il est possible de connaître avec exactitude l'authenticité des pièces et leur origine.

Le marquage est particulièrement recherché pour les aubes de turbine et de compresseur d'une turbomachine aéronautique. En effet, les aubes sont des pièces de rechange critiques dont il est important de connaître avec exactitude l'origine pour pouvoir prendre en compte l'influence du remplacement de ces pièces sur la durée de vie de la turbine ou du compresseur en question.

Le marquage de pièces, et notamment d'aubes de turbine ou de compresseur d'une turbomachine aéronautique, peut être réalisé de différentes manières. On connaît ainsi le marquage au moyen d'un laser venant réaliser en plusieurs passes une empreinte dans la pièce à marquer par enlèvement de matière. On connaît également le marquage mécanique à l'aide d'un marteau ou d'un piston pneumatique qui permet, par impacts successifs, d'imprimer sur la pièce à marquer un numéro de série. On connait encore le marquage réalisé au moyen d'une fraiseuse manuelle ou automatique.

Les techniques de marquage qui reposent sur le principe d'enlever de la matière ou de déformer la pièce à marquer afin d'y apposer une représentation graphique voulue présentent un inconvénient évident sur la santé du matériau de la pièce à marquer. Dans le cas notamment d'une pièce réalisée dans un alliage métallique monocristallin, la déformation ou l'enlèvement de matière peut en effet conduire à une recristallisation localisée ou à un défaut de microstructure irréversible.

Par ailleurs, lorsqu'il s'agit de marquer une pièce par une représentation graphique prédéfinie avec un effet de type holographique, les procédés connus de marquage reposent sur l'ajout de matière, par exemple par la modification d'un film photosensible ou par la superposition d'images au sein d'un polymère.

Or, ces techniques de marquage par ajout de matière sont complexes et onéreuses à mettre en oeuvre, notamment dans le cas d'une pièce réalisée dans un alliage métallique monocristallin. Le document US2013/270269A1 décrit un procédé de marquage en surface d'une pièce mécanique par une représentation graphique prédéfinie avec effet de type holographique, comprenant l'application, au moyen d'une source de laser, d'une succession d'impulsions lasers sur une surface extérieure d'une pièce à marquer avec interposition entre la source de laser et la surface extérieure de la pièce d'un masque ayant un motif particulier.

### Objet et résumé de l'invention

La présente invention a donc pour but principal de pallier de tels inconvénients en proposant un procédé qui permet de réaliser de façon simple et rapide un marquage en surface d'une pièce mécanique par une représentation graphique prédéfinie avec effet de type holographique ne présentant pas les inconvénients précités.

Conformément à l'invention, ce but est atteint grâce à un procédé de marquage en surface d'une pièce mécanique par une représentation graphique prédéfinie avec effet de type holographique, comprenant l'application, au moyen d'une source de laser, d'une succession d'impulsions lasers sur une surface extérieure d'une pièce à marquer avec interposition entre la source de laser et la surface extérieure de la pièce de différents masques ayant chacun un motif particulier, chaque impulsion laser ayant une puissance surfacique d'au moins 20 MW/cm² et une durée inférieure ou égale à 100 ns.

Par représentation graphique avec un effet de type holographique, on entend ici une représentation graphique qui présente une modification de la réflexion de la lumière en fonction de l'angle d'observation de ladite représentation graphique (la représentation graphique peut apparaître ou disparaître selon son inclinaison par rapport à l'oeil de l'observateur et créer ainsi une illusion de profondeur ou de relief).

La Demanderesse a constaté que l'application d'une succession d'impulsions lasers dans les conditions précitées au travers de différents masques permet de réaliser un marquage d'une représentation graphique prédéfinie avec effet de type holographique sur une pièce de moteur à turbine à gaz avec une très faible ablation de matière et une excellente tenue à des conditions oxydantes et à haute température.

Notamment, il a été constaté que l'empreinte laissée par ces impulsions lasers sur la surface de la pièce à marquer est très superficielle en profondeur (inférieure au micromètre). Il a également été constaté que l'empreinte réalisée par ces impulsions lasers perdure même lorsqu'elle est soumise à haute température (de l'ordre de 1100°C) dans un environnement fortement oxydant.

De la sorte, pour une application au marquage d'aubes de compresseur ou de turbine, le procédé selon l'invention peut être appliqué au niveau de la partie des aubes qui est exposée aux gaz (i.e. au niveau de la pale), ce qui évite tous les inconvénients d'un marquage dans une zone masquée de l'aube. Notamment, l'identification des aubes par leur marquage est rendu possible même lorsque les aubes sont montées sur moteur.

De plus, il a été constaté que le procédé selon l'invention est tout aussi efficace (en termes de faible ablation de matière et de bonne tenue) que la pièce à marquer soit réalisée en métal (notamment Ni, Al, Ti, Fe, etc.), en matériau composite (notamment en fibres de carbone et matrice époxy) ou en céramique (notamment en zircone).

Enfin, le résultat visuel obtenu par le procédé selon l'invention dépend de l'enchaînement des différentes impulsions lasers appliquées sur la surface extérieure de la pièce. En particulier la puissance surfacique et/ou le diamètre du masque et/ou le motif particulier du masque peuvent être différents pour chaque impulsion appliquée sur la surface extérieure de la pièce.

Une lentille de focalisation peut être intercalée entre la source de laser et la surface extérieure de la pièce afin de modifier la taille du faisceau émis par la source de laser. Celle-ci peut être un laser Nd-YAG. De plus, chaque impulsion laser peut avoir un diamètre d'impact d'au moins 0,5mm, ce qui rend le marquage réalisé visible à l'oeil nu.

Lorsque la pièce à marquer est réalisée en métal, chaque impulsion laser a de préférence une puissance surfacique comprise entre 0,04 GW/cm² et 0,55 GW/cm².

Lorsque la pièce à marquer est réalisée en matériau composite à fibres de carbone et matrice époxy, chaque impulsion laser a de préférence une puissance surfacique comprise entre 0,15 GW/cm² et 2 GW/cm².

Lorsque la pièce à marquer est réalisée en céramique, chaque impulsion laser a de préférence une puissance surfacique comprise entre 0,10 GW/cm² et 0,34 GW/cm².

L'invention concerne également l'application du procédé tel que défini précédemment au marquage d'une aube de soufflante, de turbine ou de compresseur d'une turbomachine aéronautique.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique d'un exemple de montage pour la mise en oeuvre du procédé ; et
- les figures 2 à 5 montrent un exemple de mise en oeuvre du procédé selon l'invention.

### Description détaillée de l'invention

L'invention s'applique au marquage en surface de toute pièce d'un moteur à turbine à gaz par une représentation graphique prédéfinie avec effet de type holographique.

Par « représentation graphique prédéfinie », on entend toute forme géométrique ou dessin prédéterminée, telle que par exemple un logo, un numéro de série, un code Datamatrix, etc.

Par « effet de type holographique », on entend une représentation graphique qui présente une modification de la réflexion de la lumière en fonction de l'angle d'observation de ladite représentation graphique.

Un exemple d'application non limitatif de l'invention est celui du marquage en surface d'aubes de soufflante, de turbine ou de compresseur d'une turbomachine aéronautique.

Le procédé selon l'invention comprend l'application d'une succession d'impulsions lasers sur la surface extérieure d'une pièce à marquer avec interposition entre la source de laser et la surface extérieure de la pièce de différents masques ayant chacun un motif particulier, qui lorsque additionnés les uns aux autres, définissent la représentation graphique que l'on souhaite marquer sur la pièce.

Selon l'invention, chaque impulsion laser qui est appliquée sur la surface extérieure de la pièce possède une puissance surfacique d'au moins 20 MW/cm² et une durée inférieure ou égale à 100 nanosecondes.

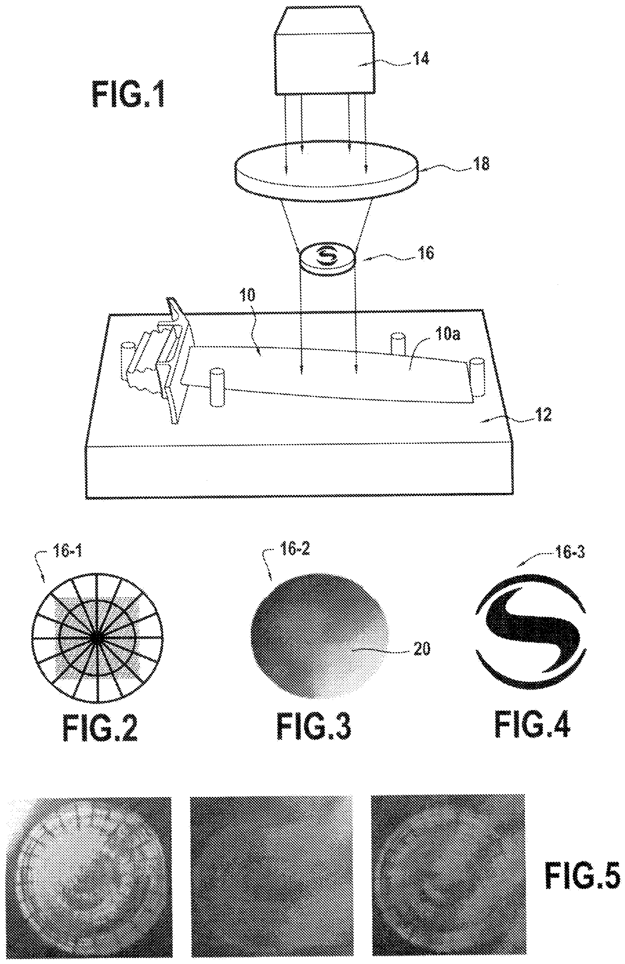

La figure 1 illustre schématiquement un exemple de montage pouvant être utilisé pour la mise en oeuvre du procédé de marquage selon l'invention.

Une pièce à marquer 10 (par exemple une aube de turbine) ayant une surface extérieure 10a sur laquelle doit être pratiquée le marquage est supportée par un bâti de maintien 12. La surface extérieure 10a de la pièce est tournée vers le haut.

Une source de laser 14, par exemple un laser de type Nd-YAG produisant un rayonnement de longueur d'onde de 1,064 µm doublée en fréquence, est positionnée au-dessus du bâti de maintien 12 et est configurée pour délivrer des impulsions ayant une puissance surfacique d'au moins 20 MW/cm² et une durée inférieure ou égale à 100 ns.

Par ailleurs, un masque 16 ayant un motif graphique particulier est intercalé entre la source de laser et la surface extérieure 10a de la pièce 10 à marquer. De même, une lentille de focalisation 18 (convergente ou divergente) est positionnée entre le laser 14 et le masque 16 afin d'adapter la taille du faisceau émis par le laser aux dimensions du masque.

De la sorte, le laser 14 produit un rayonnement qui est focalisé au moyen de la lentille de focalisation 18 en un faisceau traversant le masque 16 avant d'illuminer une zone choisie de la surface extérieure de la pièce. L'impulsion laser produite par le laser 14 engendre au niveau de cette zone un plasma dont l'expansion s'accompagne d'une importante libération d'énergie (thermomécanique et acoustique) à l'origine d'une modification locale à la surface de la pièce à marquer. Lorsque l'impulsion laser produite par le laser est paramétrée comme précisé précédemment (à savoir avec une puissance surfacique d'au moins 20 MW/cm² et une durée inférieure ou égale à 100 ns), cette modification locale à la surface de la pièce se traduit par une empreinte laissée à la surface de la pièce.

En appliquant une succession d'impulsions lasers dans ces conditions, avec, entre chaque impulsion laser, un changement de masque et un changement de la puissance surfacique de l'impulsion, le marquage obtenu par le procédé selon l'invention consiste en une superposition des différents motifs des masques formant un dessin avec un effet de type holographique.

Le procédé de marquage selon l'invention peut être appliqué à tout type de matériau. Il est en particulier parfaitement adapté au marquage de pièces en métal, en céramique ou en matériau composite. Il s'applique également à tout matériau de revêtement de surface d'une pièce.

Dans le cas d'une pièce à marquer réalisée en métal, on appliquera, pour chaque impulsion laser, une puissance surfacique comprise de préférence entre 0,04 GW/cm² et 0,55 GW/cm² de sorte à obtenir une empreinte parfaitement intelligible.

Plus précisément, dans le cas d'une pièce en nickel, on appliquera avantageusement une puissance surfacique comprise entre 0,10 GW/cm² et 0,52 GW/cm². Dans le cas d'une pièce en aluminium, on appliquera une puissance surfacique comprise entre 0,20 GW/cm² et 0,55 GW/cm², et dans le cas d'une pièce en acier, on appliquera une puissance surfacique comprise de préférence entre 0,10 GW/cm² et 0,50 GW/cm².

Par ailleurs, dans le cas d'une pièce à marquer réalisée en matériau composite à fibres de carbone et matrice époxy, chaque impulsion laser aura de préférence une puissance surfacique comprise entre 0,15 GW/cm² et 2 GW/cm² de sorte à obtenir une empreinte parfaitement intelligible.

Enfin, dans le cas d'une pièce à marquer réalisée en céramique, chaque impulsion laser aura de préférence une puissance surfacique comprise entre 0,10 GW/cm² et 0,34 GW/cm² de sorte à obtenir une empreinte parfaitement intelligible.

En liaison avec les figures 2 à 5, on décrira maintenant un exemple de mise en oeuvre du procédé de marquage selon l'invention.

Dans cet exemple, la pièce à marquer est réalisée dans un superalliage à base nickel. La surface extérieure de cette pièce subit une succession de trois impulsions lasers avec interposition entre la source de laser et la surface extérieure de la pièce de trois masques différents.

La figure 2 représente un premier masque 16-1 qui est intercalé entre la source de laser et la surface extérieure de la pièce à marquer. Ce premier masque présente un diamètre de 15mm environ et un motif graphique particulier (cercle découpée par des rayons avec présence d'un carré à plus fort contraste au centre).

Une première impulsion laser d'une puissance surfacique P1 de 0,09 GW/cm² est appliquée sur la surface extérieure de la pièce au travers de ce premier masque 16-1.

La figure 3 représente un deuxième masque 16-2 qui est utilisé lors de la deuxième impulsion laser appliquée sur la surface extérieure de la pièce. Ce deuxième masque 16-2 présente un diamètre de 10mm environ et un motif graphique particulier (cercle opaque avec une plus faible opacité dans une portion périphérique 20).

Une deuxième impulsion laser d'une puissance surfacique P2 de 0,130 GW/cm² est appliquée sur la surface extérieure de la pièce au travers de ce deuxième masque 16-2.

La figure 4 représente un troisième masque 16-3 qui est utilisé lors de la troisième impulsion laser appliquée sur la surface extérieure de la pièce. Ce troisième masque 16-3 présente un diamètre de 6mm environ et un motif graphique particulier (cercle avec au centre un motif en forme de S).

Une troisième impulsion laser d'une puissance surfacique P3 de 0,300 GW/cm² est appliquée sur la surface extérieure de la pièce au travers de ce troisième masque 16-3.

La figure 5 montre le résultat obtenu par l'application de ces trois impulsions lasers sur la surface extérieure de la pièce. On distingue sur cette figure une empreinte formée sur la surface extérieure de la pièce, cette empreinte ayant une représentation graphique constituée par l'addition des motifs graphiques des trois masques utilisés.

De plus, les trois images représentées sur cette figure sont des vues de cette empreinte selon trois angles d'observation de l'empreinte différents. On constate ainsi que la représentation graphique marquée en surface de la pièce peut apparaître ou disparaître selon son inclinaison par rapport à l'oeil de l'observateur et créer ainsi une illusion de profondeur ou de relief.

## Revendications

1. Procédé de marquage en surface d'une pièce mécanique par une représentation graphique prédéfinie avec effet de type holographique, comprenant l'application, au moyen d'une source de laser (14), d'une succession d'impulsions lasers sur une surface extérieure (10a) d'une pièce (10) à marquer avec interposition entre la source de laser et la surface extérieure de la pièce de différents masques (16-1, 16-2, 16-3) ayant chacun un motif particulier, chaque impulsion laser ayant une puissance surfacique d'au moins 20 MW/cm² et une durée inférieure ou égale à 100 ns.

2. Procédé selon la revendication 1, dans lequel la puissance surfacique et/ou le diamètre du masque et/ou le motif particulier du masque sont différents pour chaque impulsion appliquée sur la surface extérieure de la pièce.

3. Procédé selon l'une des revendications 1 et 2, dans lequel une lentille de focalisation (18) est intercalée entre la source de laser (14) et la surface extérieure de la pièce.

4. Procédé l'une quelconque des revendications 1 à 3, dans lequel la source de laser est un laser Nd-YAG.

5. Procédé selon l'une quelconque des revendications 1 à 4, dans lequel chaque impulsion laser a un diamètre d'impact d'au moins 0,5mm.

6. Procédé selon l'une quelconque des revendications 1 à 5, dans lequel, lorsque la pièce à marquer est réalisée en métal, chaque impulsion laser a une puissance surfacique comprise entre 0,04 GW/cm² et 0,55 GW/cm².

7. Procédé selon l'une quelconque des revendications 1 à 5, dans lequel, lorsque la pièce à marquer est réalisée en matériau composite à fibres de carbone et matrice époxy, chaque impulsion laser a une puissance surfacique comprise entre 0,15 GW/cm² et 2 GW/cm².

8. Procédé selon l'une quelconque des revendications 1 à 5, dans lequel, lorsque la pièce à marquer est réalisée en céramique, chaque impulsion laser a une puissance surfacique comprise entre 0,10 GW/cm² et 0,34 GW/cm².

9. Application du procédé selon l'une quelconque des revendications 1 à 8 au marquage d'une aube de soufflante, de turbine ou de compresseur d'une turbomachine aéronautique.

## Patentansprüche

1. Verfahren zur Oberflächenkennzeichnung eines mechanischen Teils mit einer vordefinierten graphischen Darstellung mit holographieartigem Effekt, umfassend das Aufbringen einer Folge von Laserpulsen mittels einer Laserquelle (14) auf eine Außenfläche (10a) eines zu kennzeichnenden Teils (10), unter Zwischenschaltung von verschiedenen Masken (16-1, 16-2, 16-3), die jeweils ein besonderes Muster aufweisen, zwischen der Laserquelle und der Außenfläche des Teils, wobei jeder Laserpuls eine Leistungsdichte von wenigstens 20 MW/cm² und eine Dauer von weniger als oder gleich 100 ns aufweist.

2. Verfahren nach Anspruch 1, bei dem die Leistungsdichte und/oder der Durchmesser der Maske und/oder das besondere Muster der Maske für jeden auf die Außenfläche des Teils aufgebrachten Puls verschieden sind.

3. Verfahren nach einem der Ansprüche 1 und 2, bei dem eine Fokussierlinse (18) zwischen der Laserquelle (14) und der Außenfläche des Teils zwischengeschaltet ist.

4. Verfahren nach einem der Ansprüche 1 bis 3, bei dem die Laserquelle ein Nd-YAG-Laser ist.

5. Verfahren nach einem der Ansprüche 1 bis 4, bei dem jeder Laserpuls einen Auftreffdurchmesser von wenigstens 0,5 mm aufweist.

6. Verfahren nach einem der Ansprüche 1 bis 5, bei dem, wenn das zu kennzeichnende Teil aus Metall gefertigt ist, jeder Laserpuls eine Leistungsdichte im Bereich zwischen 0,04 GW/cm² und 0,55 GW/cm² aufweist.

7. Verfahren nach einem der Ansprüche 1 bis 5, bei dem, wenn das zu kennzeichnende Teil aus Verbundwerkstoff mit Kohlenstofffasern und Epoxidmatrix gefertigt ist, jeder Laserpuls eine Leistungsdichte im Bereich zwischen 0,15 GW/cm² und 2 GW/cm² aufweist.

8. Verfahren nach einem der Ansprüche 1 bis 5, bei dem, wenn das zu kennzeichnende Teil aus Keramik gefertigt ist, jeder Laserpuls eine Leistungsdichte im Bereich zwischen 0,10 GW/cm² und 0,34 GW/cm² aufweist.

9. Anwendung des Verfahrens nach einem der Ansprüche 1 bis 8 auf die Kennzeichnung einer Gebläse- Turbinen- oder Verdichterschaufel einer Flugzeugturbomaschine.

## Claims

1. A method of marking the surface of a mechanical part with a predefined graphic having a holographic type effect, the method comprising using a laser source (14) to apply a succession of laser pulses to the outside surface (10a) of a part (10) for marking, with different masks (16-1, 16-2, 16-3) being interposed between the laser source and the outside surface of the part, each mask having a particular pattern, each laser pulse having a power density of at least 20 MW/cm² and a duration that is less than or equal to 100 ns.

2. A method according to claim 1, wherein the power density and/or the diameter of the mask and/or the particular pattern of the mask are different for each pulse applied to the outside surface of the part.

3. A method according to claim 1 or claim 2, wherein a focusing lens (18) is interposed between the laser source (14) and the outside surface of the part.

4. A method according to any one of claims 1 to 3, wherein the laser source is an Nd-YAG laser.

5. A method according to any one of claims 1 to 4, wherein each laser pulse has an impact diameter of at least 0.5 mm.

6. A method according to any one of claims 1 to 5, wherein when the part for marking is made of metal, each laser pulse has power density lying in the range 0.04 GW/cm² to 0.55 GW/m².

7. A method according to any one of claims 1 to 5, wherein when the part for marking is made of composite material comprising carbon fibers and an epoxy matrix, each laser pulse has a power density lying in the range 0.15 GW/cm² to 2 GW/cm².

8. A method according to any one of claims 1 to 5, wherein when the part for marking is made of ceramic, each laser pulse has a power density lying in the range 0.10 GW/cm² to 0.34 GW/cm².

9. A use of the method according to any one of claims 1 to 8, to marking a blade of a fan, of a turbine, or of a compressor of an aviation turbine engine.
